# EUROPÄISCHE PATENTSCHRIFT

(11) **EP 4 434 106 B1**
(45) Veröffentlichungstag und Bekanntmachung des Hinweises auf die Patenterteilung: **17.06.2026**
(21) Anmeldenummer: 22826311.7
(22) Anmeldetag: 14.11.2022
(51) Int. Cl.: H01M 8/04014, C01B 3/00, H01M 8/04225, H01M 8/0612

(54) **BRENNSTOFFZELLENSYSTEM**
FUEL CELL SYSTEM
SYSTÈME DE PILE À COMBUSTIBLE

(30) Priorität: 15.11.2021 AT 509122021
(43) Veröffentlichungstag der Anmeldung: 25.09.2024
(73) Patentinhaber: AVL List GmbH, 8020 Graz (AT)
(72) Erfinder: NEUBAUER, Raphael, 8042 Graz (AT)
(74) Vertreter: Gamper, Bettina
(86) Internationale Anmeldenummer: PCT/AT2022/060394
(87) Internationale Veröffentlichungsnummer: WO 2023/081951

(56) Entgegenhaltungen:
- EP-B1- 1 181 241
- EP-B1- 2 044 644
- US-A1- 2020 161 675

## Beschreibung

Die Erfindung betrifft ein Brennstoffzellensystem, insbesondere ein SOFC-System, umfassend zumindest einen Brennstoffzellenstapel mit einem Anodenabschnitt und einem Kathodenabschnitt, einen Luftzuführabschnitt, einen Brennstoffzuführabschnitt mit einem als Reformwärmetauscher ausgebildeten Reformer und einen Abgasabschnitt mit einem Oxidationskatalysator, wobei ein CPOX-Reformer zum Herstellen von Schutzgas durch eine katalytisch partielle Oxidation vorgesehen ist, wobei eine Wärmequelle für den CPOX-Reformer vorgesehen ist.

Weiter betrifft die Erfindung eine Verwendung eines solchen Brennstoffzellensystems.

SOFC-Systeme sind aus dem Stand der Technik bekannt, wie beispielsweise US 2020/161675 A1 oder EP 2 044 644 B1. Viele Brennstoffzellensysteme, insbesondere Hochtemperatur-Brennstoffzellensysteme benötigen ein Schutzgas, um den Brennstoffzellenstapel, insbesondere die Brennstoffelektrode, vor Degradation während des Aufheizvorganges zu schützen. Dabei kann es notwendig sein, Wärme in das System einzubringen. Dies ist allerdings nicht ohne Weiteres möglich, da es im Brennstoffzellensystem sehr unterschiedliche Temperaturanforderungen gibt. Hier setzt die Erfindung an. Aufgabe der Erfindung ist es, ein Brennstoffzellensystem bereitzustellen, welches besonders effizient aufheizbar ist, wobei gleichzeitig insbesondere der Brennstoffzellenstapel vor einer Degradation geschützt ist.

Weiter ist es ein Ziel, eine Verwendung eines solchen Brennstoffzellensystems anzugeben.

Die Aufgabe wird erfindungsgemäß dadurch gelöst, dass bei einem Brennstoffzellensystem der eingangs genannten Art der CPOX-Reformer in den als Reformwärmetauscher ausgebildeten Reformer integriert ist, wobei heißes Kathodenabgas die Wärmequelle ist.

Ein dadurch erzielter Vorteil ist insbesondere darin zu sehen, dass durch die Anordnung des CPOX-Reformers im Brennstoffzellensystem der Brennstoffzellenstapel während des Aufheizvorgangs effizient geschützt ist. Um ein geeignetes Schutzgas intern herzustellen, hat sich im Rahmen der Erfindung ein Reformer zum Herstellen von Schutzgas durch katalytisch partielle Oxidation (CPOX-Reformer) bewährt. Dabei wird insbesondere Luft und Brennstoff im CPOX-Reformer katalytisch zu einem Synthesegas umgesetzt. Diese Reaktion ist exotherm und damit selbsterhaltend.

Der CPOX-Reformer ist dabei ein Teil des Brennstoffzellensystems, welches insbesondere als Hochtemperatur-Brennstoffzellensystem und bevorzugt als SOFC-System ausgebildet ist.

Beim Brennstoffzellensystem gemäß der Erfindung ist ein Luftzuführabschnitt vorgesehen, über welchen Luft in Richtung des Kathodenabschnittes förderbar ist. Unter Luft ist im Rahmen der Erfindung ein sauerstoffhaltiges Gas zu verstehen. Weiter weist das Brennstoffzellensystem einen Brennstoffzuführabschnitt auf, über welchen Brennstoff von einer Brennstoffquelle in Richtung des Anodenabschnittes förderbar ist. Als Brennstoff kann beispielsweise ein kohlenstoffhaltiges Gas wie Methan oder Ethan, Erdgas oder auch Wasserstoff eingesetzt werden. Grundsätzlich kann auch ein flüssiger Brennstoff verwendet werden.

Der Reformer reformiert Brennstoff für die Umsetzung im Anodenabschnitt und der Oxidationskatalysator setzt verbleibende Brennstoffanteile im Abgas um, bevor dieses an die Umgebung abgegeben wird. Selbstverständlich sind im Brennstoffzellensystem vorzugsweise weitere Bauteile vorgesehen, beispielsweise Wärmetauscher und ein Rezirkulationsabschnitt mit einem Gebläse zum Rezirkulieren von Anodenabgas in Richtung des Anodenabschnittes.

Es ist eine Wärmequelle für den CPOX-Reformer vorgesehen. Dadurch ist der CPOX-Reformer vor der Oxidation der Katalysator einmal über die sogenannte Light-off Temperatur bringbar. Die Light-off Temperatur ist eine definierte Schwellentemperatur, ab welcher der CPOX-Reformer ordnungsgemäß funktioniert, sprich ab wann die selbsterhaltende katalytisch partielle Oxidation läuft.

Grundsätzlich kann die Wärmequelle als Startbrenner ausgebildet sein. Der Startbrenner ist hierfür bevorzugt ebenfalls im Brennstoffzellensystem integriert und hat normalerweise die Hauptaufgabe, das Brennstoffzellensystem auf Betriebstemperatur zu bringen. Zum Aufwärmen des CPOX-Reformers ist also eine ohnehin notwendige Komponente des Brennstoffzellensystems genutzt, wodurch also Wärme aus dem Brennstoffzellensystem selbst für das Erwärmen des CPOX-Reformers verwendet ist. Grundsätzlich kann es auch vorteilhaft sein, wenn eine andere Komponente des Brennstoffzellensystems als Wärmequelle für den CPOX-Reformer genutzt wird.

Alternativ kann eine externe, elektrische oder thermische Wärme als Wärmequelle verwendet werden kann.

Sobald die CPOX-Reaktion gestartet ist, wird die zusätzliche Energie jedenfalls in keinem dieser Fälle mehr benötigt.

Von Vorteil ist es, wenn eine Luftleitung von einer Luftquelle und eine Brennstoffleitung von einer Brennstoffquelle zum CPOX-Reformer vorgesehen ist. Das Brennstoffzellensystem umfasst vorteilhaft eine Luftquelle, von welcher Luft über den Luftzuführabschnitt in Richtung der Kathode gefördert wird. Weiter umfasst das Brennstoffzellensystem bevorzugt eine Brennstoffquelle, von welcher Brennstoff über den Brennstoffzuführabschnitt in Richtung der Anode gefördert wird. Um den CPOX-Reformer mit Luft und Brennstoff für die katalytische Oxidation zu versorgen, sind die Luftquelle und die Brennstoffquelle fluidisch mit der Luftleitung bzw. der Brennstoffleitung verbunden. Dadurch ist eine separate Bereitstellung von Luft und Brennstoff für den CPOX-Reformer vermieden. Bevorzugt sind die Luftquelle und die Brennstoffquelle auch noch mit dem Startbrenner fluidisch verbunden.

Vorteilhaft ist es, wenn eine fluidische Verbindung zwischen dem CPOX-Reformer und dem Brennstoffzuführabschnitt vorgesehen ist, wobei das durch den CPOX-Reformer hergestellte Schutzgas insbesondere stromaufwärts oder stromabwärts des Reformers in den Brennstoffzuführabschnitt einbringbar ist. Ein Einbringen vor bzw. stromabwärts des Reformers hat folgende Vorteile: Das Schutzgas aus dem CPOX-Reformer weist typischerweise eine Temperatur von mehr als 600 °C auf. Um etwaige Temperaturbegrenzung einhalten zu können, wird es im Reformer stromaufwärts des Brennstoffzellenstapels temperiert, um den Brennstoffzellenstapel vor zu hohen Einlasstemperaturen zu schützen. Darüber hinaus kann das Schutzgas auch für die Aktivierung von z. B. Ni-basierten Katalysatoren im Reformer verwendet werden. Sind sowohl Temperatur als auch Reformeraktivierung kein Problem, kann das Schutzgas vorteilhaft auch direkt vor dem Brennstoffzellenstapel, sprich stromabwärts des Reformers eingebracht werden.

Es ist erfindungsgemäß vorgesehen, dass der CPOX-Reformer in den Reformer integriert ist. Dadurch ist es möglich, die Komplexität und den Bauraum des gesamten Brennstoffzellensystems gering zu halten. Dies ist vorteilhaft, weil dabei keine zusätzliche Brennstoffleitung und kein zusätzlicher Reformer benötigt werden. Hier erfolgt die Aufwärmung über die Light-off Temperatur des CPOX-Reformers erfindungsgemäß über das Brennstoffzellensystem intern, und zwar über das heiße Kathodenabgas selbst, wobei die Light-off Temperatur hier in einem Bereich zwischen 250 °C und 500 °C liegt. Um ein Aufheizen eines derart ausgebildeten CPOX-Reformers durch ein Kathodenabgas zu ermöglichen, ist der Reformer als ein Reformerwärmetauscher ausgebildet, wobei eine heiße Seite des Reformerwärmetauschers in einer Kathodenabführleitung angeordnet ist. Das heißt, dass der Reformer und der darin integrierte CPOX-Reformer werden durch das heiße Kathodenabgas auf Betriebstemperatur gebracht. Der Reformerwärmetauscher umfasst eine kalte Seite stromaufwärts des Anodenabschnitts, die einen Reformer und den CPOX-Reformer bildet, und eine heiße Seite stromabwärts des Kathodenabschnitts, die einen Wärmetauscher bildet. Es hat sich herausgestellt, dass es unter Abwägung verschiedener Faktoren durchaus möglich ist bzw. auch von Vorteil sein kann, das Kathodenabgas vollständig dem Wärmetauscher am Reformer bzw. der heißen Seite des Reformerwärmetauschers zuzuführen. Zunächst ist es von Vorteil, dass keine Strömungsteiler stromabwärts des Kathodenabschnitts nötig sind. Strömungsteiler führen zu einem komplexen Systemaufbau, für welchen entsprechend komplexe Funktionsbauteile erforderlich sind. Diese sind nicht nur teuer, sondern schlagen sich auch im Gewicht nieder, welches es insbesondere bei mobilen Anwendungen stets zu reduzieren gilt. Darüber hinaus müssen durch die Verwendung von Strömungsteilern komplexe Steuerungs- und Regelungsschritte in das Brennstoffzellensystem implementiert werden. Darauf kann verzichtet werden, wenn das Kathodenabgas vom Kathodenabschnitt direkt und unverzweigt, also vollständig, zum Wärmetauscher am Reformer geleitet wird.

Sobald die CPOX-Reaktion gestartet ist, beginnt die exotherme CPOX-Reaktion (bei einem Erreichen von 600 °C oder mehr), wodurch der Katalysator des Reformers aktiv gekühlt wird (Kathodenabgastemperatur liegt z. B. bei metallbasierten Brennstoffzellenstapel im Aufheizvorgang meist unter 600 °C). Der Reformerkatalysator ist hierbei bevorzugt sowohl für CPOX-Reformierung als auch für Dampfreformierung ausgebildet. Dies kann bevorzugt über eine zweistufigen Reformer (Edelmetallkatalysator mit anschließenden Ni-basierten Katalysator) oder über einen dementsprechend robusten einstufigen Katalysator erreicht werden.

Eine Verwendung eines erfindungsgemäßen Brennstoffzellensystems erfolgt mit Vorteil als stationäre Anlage oder in einem Kraftfahrzeug. Vorteilhaft kann das erfindungsgemäße Brennstoffzellensystem auch in marinen Anwendungen oder Flugzeugen verwendet werden.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung im Einzelnen beschrieben ist. Es zeigt schematisch:
Fig. 1 eine schematische Darstellung eines erfindungsgemäßen Brennstoffzellensystems;
Fig. 2 eine schematische Darstellung eines weiteren erfindungsgemäßen Brennstoffzellensystems.

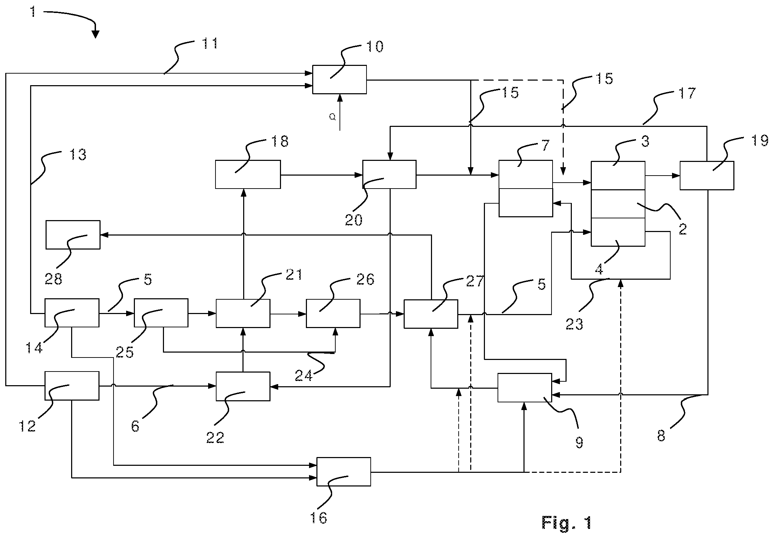

Fig. 1 zeigt ein erfindungsgemäßes Brennstoffzellensystem 1 mit einem Brennstoffzellenstapel 2 umfassend einen Anodenabschnitt 3 und einen Kathodenabschnitt 4. Es ist eine Luftquelle 14 vorgesehen, an welche ein Luftzuführabschnitt 5 anschließt, um Luft in Richtung des Kathodenabschnittes 4 zu fördern. Ebenso ist eine Brennstoffquelle 12 vorgesehen, an welche sich ein Brennstoffzuführabschnitt 6 anschließt, um Brennstoff in Richtung des Anodenabschnittes 3 zu fördern. Das Brennstoffzellensystem 1 umfasst weiter einen Rezirkulationsabschnitt 17, über welches Abgas aus dem Anodenabschnitt 3 durch ein Gebläse 18 wieder in Richtung des Anodenabschnittes 3 gefördert wird. Stromabwärts des Brennstoffzellenstapels 2 ist eine erste Aufteilvorrichtung 19 vorgesehen über welche das Anodenabgas in den Rezirkulationsabschnitt 17 und in den Abgasabschnitt 8 aufteilbar ist.

Der Teil des Anodenabgases im Rezirkulationsabschnitt 17, sprich das rezyklierte Abgas, wird durch einen ersten Wärmetauscher 20 und anschließend im Brennstoffzuführabschnitt 6 durch einen zweiten Wärmetauscher 21 geleitet. Der erste Wärmetauscher 20 ist stromaufwärts des zweiten Wärmetauschers 21 angeordnet, wobei eine heiße Seite des ersten Wärmetauschers 20 im Rezirkulationsabschnitt 17 und eine kalte Seite des ersten Wärmetauschers 20 im Brennstoffzuführabschnitt 6 angeordnet ist. Dem heißen Anodenabgas wird also Wärme entzogen und der erste Wärmetauscher 20 ist als Brennstoff/Brennstoff-Wärmetauscher ausgebildet. Das Gebläse 18, welches als Rezirkulationsgebläse ausgebildet ist, ist zwischen dem ersten Wärmetauscher 20 und dem zweiten Wärmetauscher 21 angeordnet und zur Förderung des Anodenabgases ausgebildet.

Stromaufwärts des zweiten Wärmetauschers 21 ist eine fluidische Verbindung 22 zwischen dem Rezirkulationsabschnitt 17 und dem Brennstoffzuführabschnitt 6 vorgesehen. Der frische Brennstoff wird nun zusammen mit dem rezirkulierten Abgas in Richtung des Anodenabschnittes 3 gefördert. Dabei wird dieser Brennstoff nun in einem ersten Schritt durch die kalte Seite des ersten Wärmetauschers 20 geführt, wodurch dieser wieder erwärmt wird.

Stromaufwärts des Anodenabschnittes 3 und stromabwärts der kalten Seite des ersten Wärmetauschers 20 ist ein Reformerwärmetauscher 7 angeordnet, welcher den Brennstoff zur Verwendung im Anodenabschnitt 3 aufbereitet. Dem Reformerwärmetauscher 7 wird zum Aufwärmen des entsprechenden Reformerabschnittes Kathodenabgas über eine Kathodenabführleitung 23 zugeführt.

Der Luftzuführabschnitt 5 weist eine Bypassleitung 24 auf, über welche der zweite Wärmetauscher 21 umgangen werden kann. Hierfür ist stromaufwärts der kalten Seiten des zweiten Wärmetauchers 21 eine Abzweigung 25, von welcher die Bypassleitung 24 abzweigt, und stromabwärts der kalten Seiten des zweiten Wärmetauschers 21 eine Verbindung 26, bei welcher die Bypassleitung 24 sich wieder verbindet, vorgesehen. Stromabwärts der Verbindung 26 ist ein weiterer Wärmetauscher 27 vorgesehen, wobei dessen kalte Seite in der Luftzuführleitung 5 und dessen warme Seite im Abgasabschnitt 8 angeordnet ist, sodass das heiße Abgas Wärme auf die Luft zur Verwendung im Kathodenabschnitt 4 überträgt.

Im Abgasabschnitt 8 ist ein Oxidationskatalysator 9 angeordnet, wobei in diesen sowohl eine Abgasleitung als auch die Kathodenabführleitung 23 (stromabwärts des Reformerwärmetauschers 7 führen. Es wird also Anodenabgas unter Zufuhr von Kathodenabgas verbrannt. Das verbrannte Abgas wird dann über den weiteren Wärmetauscher 27 an die Umgebung 28 abgeführt.

Das Brennstoffzellensystem 1 gemäß Fig. 1 umfasst weiter einen Startbrenner 16, welchem sowohl Brennstoff aus der Brennstoffquelle 12 als auch Luft aus der Luftquelle 14 zugeführt werden. Der Startbrenner 16 ist zum Aufheizen des Brennstoffzellensystems 1 angeordnet und ausgebildet. Hierfür wird die Wärme beispielsweise direkt dem Oxidationskatalysator 9 (durchgezogenen Linie) oder dem Abgasabschnitt stromabwärts davon oder der Luftzuführleitung 5 oder der Kathodenabluftleitung 23 (jeweils dargestellt durch strichlierte Linien) zugeführt.

Darüber hinaus ist ein CPOX-Reformer 10 zum Herstellen von Schutzgas durch katalytisch partielle Oxidation vorgesehen. Auch diesem wird gemäß Fig. 1 sowohl Brennstoff als auch Luft über eine Brennstoffleitung 11 bzw. eine Luftleitung 13 von der Brennstoffquelle 12 bzw. der Luftquelle 14 zugeführt. Da es eine gewisse Light-off Temperatur braucht, um den CPOX-Reformer 10 auf Betriebstemperatur zu bringen, ist eine Wärmequelle Q zum CPOX-Reformer 10 vorgesehen. Durch den CPOX-Reformer 10 bzw. die darin stattfindende Oxidation wird ein sogenanntes Schutzgas hergestellt welches beispielsweise stromaufwärts (durchgezogene Linie) oder stromabwärts (gestrichelte Linie) des Reformerwärmetauschers 7 zugeführt werden kann, um insbesondere den Brennstoffzellenstapel 2 zu schützen.

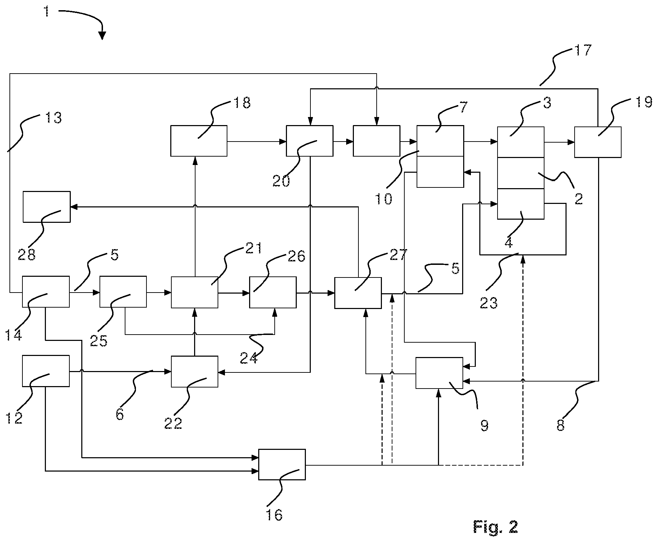

Fig. 2 zeigt ein weiteres erfindungsgemäßes Brennstoffzellensystem 1. Elemente, welche die gleiche Funktion und insbesondere gleiche Anordnung wie jene gemäß Fig. 1 haben, haben auch die gleichen Bezugszeichen und werden nicht weiter beschrieben. Im Unterschied zur Fig. 1 ist beim Brennstoffzellensystem 1 gemäß Fig. 2 der CPOX-Reformer 10 zum Herstellen von Schutzgas durch katalytisch partielle Oxidation nicht als separates Element ausgebildet und angeordnet, sondern in den Reformerteil des Reformerwärmetauschers 7 integriert. Hierfür ist der Reformerwärmetauscher 7 sowohl für CPOX als auch für Dampfreformierung ausgebildet.

Es versteht sich, dass es sich hierbei nur um eine beispielhafte Darstellung eines Brennstoffzellensystems 1 handelt, welches nicht alle in Fig. 1 und 2 beschriebenen Elemente zwingend aufweisen muss. Beispielsweise kann das Brennstoffzellensystem 1 auch ohne Rezirkulationsabschnitt 17 ausgebildet sein.

Zusammenfassend weist das erfindungsgemäße Brennstoffzellensystem insbesondere folgende Vorteile auf:
- Ein Schutzgas für den Brennstoffzellenstapel und die Reformerkatalysatoraktivierung wird im System intern erzeugt;
- Der Reaktor für die Schutzgaserzeugung kann in den Reformer integriert und damit das System vereinfacht werden;
- Die initiale Erwärmung des CPOX-Reformers 10 kann systemintern bewerkstelligt werden, wodurch auch während eines Betriebs der Katalysator aktiv gekühlt werden kann, um das Risiko von thermischer Degradation zu verringern.

## Patentansprüche

1. Brennstoffzellensystem (1), insbesondere SOFC-System, umfassend zumindest einen Brennstoffzellenstapel (2) mit einem Anodenabschnitt (3) und einem Kathodenabschnitt (4), einen Luftzuführabschnitt (5), einen Brennstoffzuführabschnitt (6) mit einem als Reformwärmetauscher (7) ausgebildeten Reformer, und einen Abgasabschnitt (8) mit einem Oxidationskatalysator (9), wobei ein CPOX-Reformer (10) zum Herstellen von Schutzgas durch eine katalytisch partielle Oxidation vorgesehen ist, wobei eine Wärmequelle (Q) für den CPOX-Reformer (10) vorgesehen ist, **dadurch gekennzeichnet, dass** der CPOX-Reformer (10) in den als Reformwärmetauscher (7) ausgebildeten Reformer integriert ist, wobei heißes Kathodenabgas die Wärmequelle (Q) ist.

2. Brennstoffzellensystem (1) nach Anspruch 1, **dadurch gekennzeichnet, dass** eine Brennstoffleitung (11) von einer Brennstoffquelle (12) und eine Luftleitung (13) von einer Luftquelle (14) zum CPOX-Reformer (10) vorgesehen ist.

3. Brennstoffzellensystem (1) nach einem der Ansprüche 1 oder 2, **dadurch gekennzeichnet, dass** eine fluidische Verbindung (15) zwischen dem CPOX-Reformer (10) und dem Brennstoffzuführabschnitt (6) vorgesehen ist, wobei das durch den CPOX-Reformer (10) hergestellte Schutzgas insbesondere stromaufwärts oder stromabwärts des Reformers in den Brennstoffzuführabschnitt (6) einbringbar ist.

4. Verwendung eines Brennstoffzellensystems (1) nach einem der Ansprüche 1 bis 3 als stationäre Anlage oder in einem Kraftfahrzeug.

## Claims

1. Fuel cell system (1), in particular SOFC system, comprising at least one fuel cell stack (2) having an anode section (3) and a cathode section (4), an air supply section (5), a fuel supply section (6) with a reformer designed as a reforming heat exchanger (7), and an exhaust gas section (8) with an oxidation catalyst (9), wherein a CPOX reformer (10) is provided for producing a protective gas by catalytic partial oxidation, and a heat source (Q) is provided for the CPOX reformer (10), **characterized in that** the CPOX reformer (10) is integrated into the reformer designed as a reforming heat exchanger (7), wherein hot cathode exhaust gas constitutes the heat source (Q).

2. Fuel cell system (1) according to claim 1, **characterized in that** fuel line (11) from a fuel source (12) and an air line (13) from an air source (14) are provided to the CPOX reformer (10).

3. Fuel cell system (1) according to any one of claims 1 or 2, **characterized in that** a fluid connection (15) is provided between the CPOX reformer (10) and the fuel supply section (6), wherein the protective gas produced by the CPOX reformer (10) can be introduced into the fuel supply section (6), in particular upstream or downstream of the reformer.

4. Use of a fuel cell system (1) according to any one of claims 1 to 3 as a stationary installation or in a motor vehicle.

## Revendications

1. Système de pile à combustible (1), en particulier système SOFC, comprenant au moins un empilement de piles à combustible (2) comportant une section anodique (3) et une section cathodique (4), une section d'alimentation en air (5), une section d'alimentation en combustible (6) avec un réformateur conçu comme échangeur de chaleur de reformage (7), et une section d'échappement (8) avec un catalyseur d'oxydation (9), un réformateur CPOX (10) étant prévu pour la production d'un gaz de protection par oxydation partielle catalytique, une source de chaleur (Q) étant prévue pour le réformateur CPOX (10), **caractérisé en ce que** le réformateur CPOX (10) est intégré dans le réformateur conçu comme échangeur de chaleur de reformage (7), l'échappement cathodique chaud constituant la source de chaleur (Q).

2. Système de pile à combustible (1) selon la revendication 1, **caractérisé en ce qu'**une conduite de combustible (11) provenant d'une source de combustible (12) et une conduite d'air (13) provenant d'une source d'air (14) sont prévues vers le réformateur CPOX (10).

3. Système de pile à combustible (1) selon l'une des revendications 1 ou 2, **caractérisé en ce qu'**une liaison fluide (15) est prévue entre le réformateur CPOX (10) et la section d'alimentation en combustible (6), le gaz de protection produit par le réformateur CPOX (10) pouvant être introduit dans la section d'alimentation en combustible (6), notamment en amont ou en aval du réformateur.

4. Utilisation d'un système de pile à combustible (1) selon l'une quelconque des revendications 1 à 3 comme installation stationnaire ou dans un véhicule automobile.
